# EUROPÄISCHE PATENTANMELDUNG

(11) **EP 1 719 978 A1**
(43) Veröffentlichungstag der Anmeldung: **08.11.2006**
(21) Anmeldenummer: 06002141.7
(22) Anmeldetag: 02.02.2006
(51) Int. Cl.: G01D 11/24

(54) **Messgerät**

(30) Priorität: 03.05.2005 DE 102005021000
(71) Anmelder: KROHNE MESSTECHNIK GMBH & CO. KG, 47058 Duisburg (DE)
(72) Erfinder: Büssow, Jürgen, 47166 Duisburg (DE); Musiol, Günter, 47057 Duisburg (DE)
(74) Vertreter: Gesthuysen, von Rohr & Eggert

(57) **Zusammenfassung**

Die Erfindung betrifft ein Meßgerät, insbesondere nämlich ein Durchfluß- oder Füllstandsmeßgerät, mit einem Grundmodul (1) zur Erfassung und Bearbeitung von Meßdaten. Erfindungsgemäß ist ein Zusatzmodul (5, 11) vorgesehen, wobei das Grundmodul (1) und das Zusatzmodul (5, 11) jeweils eine optische Schnittstelle (4, 6) aufweisen, über die das Grundmodul (1) und das Zusatzmodul (5, 6) miteinander gekoppelt sind. Auf diese Weise wird ein Meßgerät bereitgestellt, das über den Austausch des Zusatzmoduls (5, 11) mit verschiedenen externen Schnittstellen (7) ausgerüstet werden kann, ohne daß dazu eine Neukalibrierung des Meßgeräts erforderlich ist.

## Beschreibung

Die Erfindung betrifft ein Meßgerät, insbesondere ein Durchfluß- oder Füllstandsmeßgerät, mit einem Grundmodul zur Erfassung und Bearbeitung von Meßdaten.

Mit industriellen Meßgeräten, wie Durchfluß- oder Füllstandsmeßgeräten, werden Meßdaten, wie Volumen- oder Massendurchflüsse bzw. Füllstandshöhen erfaßt Dabei kann jedoch im allgemeinen nicht direkt der interessierende Wert, wie der Volumen- oder Massendurchfluß bzw. die Füllstandshöhe, erfaßt werden. Vielmehr liegen als Meßdaten Informationen, wie die Steighöhe eines Schwebekörpers eines Schwebekörperdurchflußmeßgeräts, die Größe eines induzierten Stroms bei einem magnetisch-induktiven Durchflußmeßgerät oder die Laufzeit eines Radar-Signals bei einem Radar-Füllstandsmeßgerät vor. Wird weiterhin z. B. bei einem Schwebekörperdurchflußmeßgerät die Steighöhe des Schwebekörpers über einen Folgemagneten abgegriffen, so liegt auch die Steighöhe des Schwebekörpers lediglich mittelbar vor, nämlich in Form einer erfaßten magnetischen Flußdichte, die in Bezug zu dem vorliegenden Volumendurchfluß gebracht werden muß.

Diese direkt erfaßten Meßdaten müssen nun also bearbeitet, nämlich umgewandelt werden, um ein Signal zu erhalten, daß die eigentlich interessierende Größe, wie den Durchfluß oder den Füllstand, angibt. Dazu ist eine Linearisierung der unmittelbar erfaßten Meßdaten auf der Grundlage von vorbestimmten Kalibrierparametern erforderlich. Das heißt, daß vor dem industriellen Einsatz des jeweiligen Meßgeräts eine Kalibrierung erforderlich ist, über die die für die Linearisierung erforderlichen Parameter vorbestimmt werden, so daß im eigentlichen Meßbetrieb jedem unmittelbar erfaßten Meßwert eindeutig ein entsprechender Durchfluß- oder Füllstandswert zugeordnet werden kann.

Bei den vorliegend exemplarisch genannten Durchfluß- und Füllstandsmeßgeräten wird der damit bestimmte Durchfluß- bzw. Füllstandswert nach seiner Ermittlung angezeigt oder ausgegeben. Als Anzeigen sind analoge und digitale Anzeigen bekannt, die sich häufig direkt am Meßgerät befinden. Andererseits ist es häufig jedoch auch gewünscht, den ermittelten Meßwert an einem entfernten Ort anzuzeigen oder/und weiterzuverarbeiten. Dazu weist das Meßgerät im allgemeinen eine Schnittstelle auf, über die das Meßgerät die ermittelten Meßdaten, typischerweise in Form einer Meßspannung oder eines Meßstroms, ausgibt. Die Art der Schnittstellen und die Art der Datenübertragung sind dabei im allgemeinen durch das verwendete Protokoll- bzw. Bussystem definiert. Als Beispiele seien hier die Signalübertragung über eine Zweidrahtleitung als Stromsignal zwischen 4 und 20 mA, HART, PROFIBUS, FOUNDATION FIELDBUS usw., genannt

Problematisch ist nun, daß ein Meßgerät im allgemeinen nur mit einer Art von Schnittstelle zur Datenübertragung versehen ist, so daß bei Änderung des Systems, in das das Meßgerät eingebunden ist, entweder ein vollständiger Austausch des Meßgeräts erforderlich ist oder bei Umrüstung des Meßgeräts auf eine neue Schnittstelle wenigstens eine Neukalibrierung des Meßgeräts durchgeführt werden muß. Dies ist aufwendig und teuer.

Vor diesem Hintergrund ist es die Aufgabe die Erfindung, ein derartiges Meßgerät anzugeben, das universell und auf einfache Weise in unterschiedlichen Schnittstellensystemen eingesetzt werden kann.

Ausgehend von dem eingangs beschriebenen Meßgerät ist diese Aufgabe dadurch gelöst, daß zusätzlich zu dem Grundmodul zur Erfassung und Bearbeitung von Meßdaten ein Zusatzmodul vorgesehen ist und das Grundmodul und das Zusatzmodul jeweils eine optische Schnittstelle aufweisen, über die das Grundmodul und das Zusatzmodul miteinander gekoppelt sind.

Erfindungsgemäß ist also vorgesehen, daß das Meßgerät ein Grundmodul aufweist, das zur eigentlichen Meßwerterfassung und Bearbeitung der Meßdaten vorgesehen ist, wobei die bearbeiteten Meßdaten dann über eine optische Schnittstelle an das Zusatzmodul übertragen werden können. Damit wird es ermöglicht, unterschiedliche Zusatzmodule bereitzustellen, die an unterschiedliche Aufgaben angepaßt sind, insbesondere nämlich unterschiedliche externe Schnittstellen aufweisen, über die die Meßdaten ausgegeben werden können, nämlich, wie oben schon angesprochen, entsprechend den Standards HART, PROFIBUS, FOUNDATION FIELDBUS usw.

Gemäß einer bevorzugten Weiterbildung der Erfindung kann dabei insbesondere vorgesehen sein, daß das Grundmodul erkennt, welche Art von Zusatzmodul verwendet wird, so daß das Grundmodul nur solche Daten über die optische Schnittstelle an das Zusatzmodul überträgt, die für das jeweilige Zusatzmodul interessant sind, nämlich dort weitergegeben, angezeigt oder/und ausgegeben werden sollen.

Dabei ist es gemäß einer bevorzugten Weiterbildung der Erfindung ferner vorgesehen, daß das Grundmodul eine Linearisierungseinheit aufweist, in der die erfaßten Meßdaten in Abhängigkeit von vorbestimmten Kalibrierparametern linearisiert werden. Damit wird es möglich, bereits linearisierte Meßdaten an das Zusatzmodul zu übertragen, so daß vor dem industriellen Einsatz des erfindungsgemäßen Meßgeräts lediglich eine einzige Kalibrierung, nämlich eine Kalibrierung des Grundmoduls, erforderlich ist, und nachfolgend unterschiedliche Zusatzmodule verwendet werden können, ohne daß ein Wechsel der Art des Zusatzmoduls eine Neukalibrierung des Meßgeräts erforderlich macht.

Neben unterschiedlichen externen Schnittstellen können auch Zusatzmodule mit unterschiedlichen weiteren Funktionen oder/und Anzeigen vorgesehen sein. So sind gemäß einer bevorzugten Weiterbildung der Erfindung z. B. Zusatzmodule mit Zählerfunktion oder/und optischer Anzeige vorgesehen.

Grundsätzlich ist es möglich, daß das Grundmodul lediglich mit der optischen Schnittstelle zur Übertragung von Daten an das Zusatzmodul ausgestattet ist. Gemäß einer bevorzugten Weiterbildung der Erfindung ist jedoch vorgesehen, daß das Grundmodul eine zusätzliche Schnittstelle zur Ausgabe der Meßdaten oder/und zur Einstellung von Parametern des Grundmoduls aufweist. Insbesondere kann nämlich vorgesehen sein, daß das Grundmodul einen Zweidrahtsignalausgang oder/und eine Busschnittstelle, wie eine HART-Schnittstelle, aufweist.

Die Tatsache, daß die Datenübertragung zwischen dem Grundmodul und dem Zusatzmodul über die in Rede stehende optische Schnittstelle erfolgt, ist in mehrfacher Hinsicht vorteilhaft: Erstens werden auf diese Weise sehr hohe Datenübertragungsraten von bis zu 100 kBit erreicht. Zweitens ist auf diese Weise eine sichere galvanische Trennung zwischen dem Grundmodul und dem Zusatzmodul möglich. Dazu kann z. B. vorgesehen sein, daß das Grundmodul im Abstand von ca. 10 mm parallel zum Zusatzmodul angeordnet ist, wobei sich ein Abstand zwischen den für die optischen Schnittstellen verwendeten Lichtleitern von ca. 5 mm bewährt hat.

Weiterhin ist es grundsätzlich möglich, das Grundmodul separat mit elektrischer Energie zu versorgen. Gemäß einer bevorzugten Weiterbildung der Erfindung ist jedoch vorgesehen, daß das Grundmodul über die externe Schnittstelle des Zusatzmoduls elektrisch gespeist wird. Das bedeutet, daß zwischen dem Grundmodul und dem Zusatzmodul auch eine Drahtverbindung vorhanden ist, über die z. B. die in einem Bussystem zur Verfügung gestellte elektrische Energie auch dem Grundmodul zur Verfügung gestellt wird, das selbst nicht an das Bussystem angeschlossen ist.

Im einzelnen gibt es nun eine Vielzahl von Möglichkeiten, das erfindungsgemäße Meßgerät auszugestalten und weiterzubilden. Dazu wird auf die Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen, In der Zeichnung zeigt
- Fig. 1: einen Meßwertumformer eines Schwebekörperdurchflußmeßgeräts gemäß einem bevorzugten Ausführungsbeispiel der Erfindung mit einem Grundmodul in perspektivischer Ansicht,
- Fig. 2: schematisch die zusätzliche Anordnung eines Zusatzmoduls bei dem in Fig. 1 gezeigten Meßwertumformer,
- Fig. 3: den Meßwertumformer aus Fig. 1 mit Grund- und Zusatzmodul in perspektivischer Ansicht und
- Fig**.** 4 a, b: einen Meßwertumformer eines Schwebekörperdurchflußmeßgeräts gemäß einem anderen bevorzugten Ausführungsbeispiel.

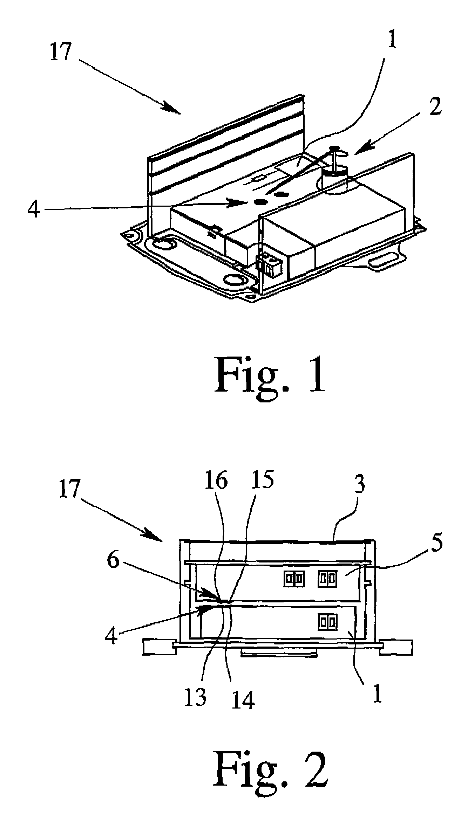

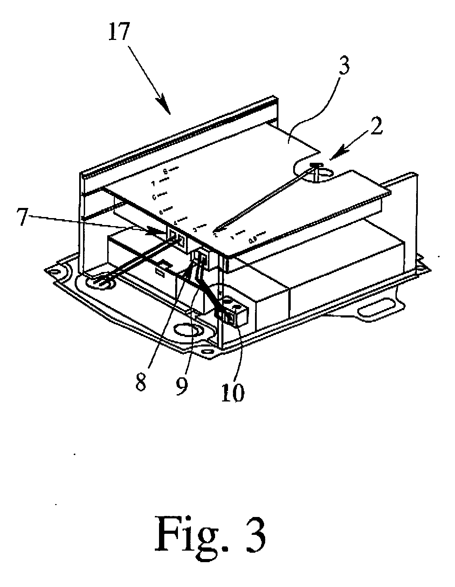

Aus Fig. 1 ist ein Meßwertumformer eines Schwebekörperdurchflußmeßgeräts gemäß einem bevorzugten Ausführungsbeispiel der Erfindung in perspektivischer Ansicht mit seinem Grundmodul 1 ersichtlich. Der Meßwertumformer weist eine Zeigereinrichtung 2 auf, die entsprechend einer bekannten Technik aufgrund einer magnetischen Kopplung die Steighöhe des nicht weiter dargestellten Schwebekörpers des Schwebekörperdurchftußmeßgeräts anzeigt. Über eine auf einer aus den Fig. 2 und 3 ersichtlichen Skalenscheibe 3 vorgesehene Skala wird der Volumendurchfluß durch die Zeigereinrichtung 2 analog angezeigt und kann unmittelbar abgelesen werden.

Darüber hinaus weist das Grundmodul 1 eine optische Schnittstelle 4 auf, mit der im Half-Duplex-Verfahren ein Datenaustausch ermöglicht wird. Dazu ist die optische Schnittstelle 4 mit einem Sender 13 und einem Empfänger 14 versehen, die voneinander räumlich getrennt sind. Wie nun weiterhin aus Fig. 2 ersichtlich, ist bei dem Meßwertumformer gemäß dem vorliegend beschriebenen Ausführungsbeispiel der Erfindung oberhalb des Grundmoduls 1 und im Abstand von diesem ein Zusatzmodul 5 vorgesehen, das parallel zu dem Grundmodul 1 verläuft und ebenfalls über eine optische Schnittstelle 6 mit einem Sender 15 und einem Empfänger 16 verfügt. Auf diese Weise kann das Grundmodul 1 einerseits erfassen, um welche Art von Zusatzmodul 5 es sich handelt, und andererseits können dann vom Grundmodul 1 die für das Zusatzmodul 5 interessanten Daten übertragen werden. Im Detail bedeutet das, daß solche Daten, die von dem Zusatzmodul 5 nicht weiter verarbeitet oder übertragen werden sollen, erst gar nicht von dem Grundmodul 1 an das Zusatzmodul 5 übertragen werden.

Das Grundmodul 1 ist mit einer nicht weiter dargestellten Linearisierungseinheit versehen, so daß die über die magnetische Kopplung erfaßten Werte für die Höhenstellung des Schwebekörpers im Zuge einer Linearisierung auf der Grundlage vorbestimmter Kalibrierungsparameter in einen Volumendurchfluß umgerechnet werden kann. Über die optische Schnittstelle 4 des Grundmoduls 1 werden somit bereits linerarisierte und damit unmittelbar den Volumendurchfluß angebende Meßwerte übertragen, so daß eine Linearisierung und damit eine Kalibrierung in Abhängigkeit von dem verwendeten Zusatzmodul 5 nicht erforderlich ist.

Die an das Zusatzmodul 5 übertragenen Durchflußdaten können nunmehr über eine externe Schnittstelle 7 des Zusatzmoduls, die einem Standard, wie PROFIBUS oder FOUNDATION FIELDBUS, folgt, ausgegeben werden. Im übrigen ist bei dem vorliegend beschriebenen bevorzugten Ausführungsbeispiel der Erfindung ferner vorgesehen, daß das Grundmodul 1 über einen Speiseausgang 8, eine Speiseleitung 9 und einen Speiseeingang 10 von dem Zusatzmodul 5 elektrische gespeist wird. Damit ist keine eigene elektrische Versorgung des Grundmoduls 1 erforderlich.

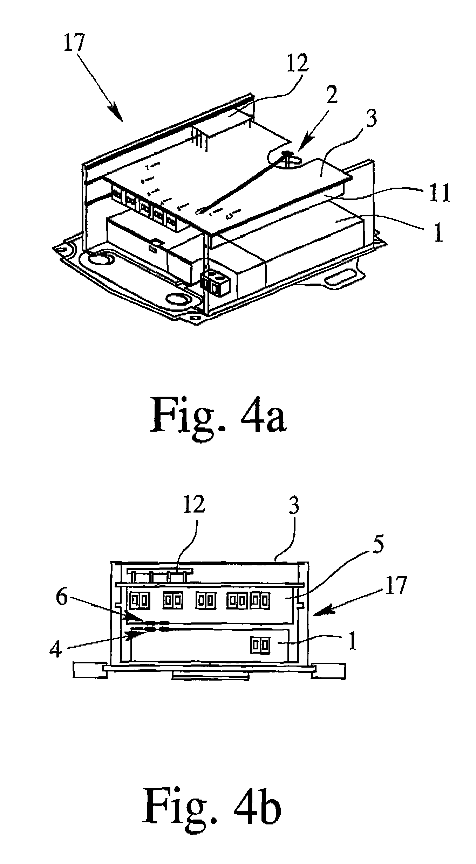

Aus den Fig. 4 a und b ist nun ein Meßwertumformer gemäß einem anderen bevorzugten Ausführungsbeispiel der Erfindung ersichtlich. Dieser Meßwertumformer weist ebenfalls ein Grundmodul 1 und ein Zusatzmodul 11 mit optischen Schnittstellen 4, 6 auf und entspricht in seinen grundlegenden Funktionen dem unter Bezugnahme auf die Fig. 1, 2 und 3 beschriebenen Meßwertumformer. Allerdings kann hier alternativ eine andere externe Schnittstelle vorgesehen sein. Außerdem ist hier zusätzlich eine Funktion des Zusatzmoduls als Summenzähler mit einer entsprechenden Anzeige 12 vorgesehen.

Ein wesentliches Merkmal der vorliegenden Erfindung liegt nun darin, daß der aus den Fig. 4 a und b ersichtliche Meßwertumformer auf einfache Weise aus dem in den Fig. 1 bis 3 gezeigten Meßwertumformer erhalten werden kann, indem lediglich das Zusatzmodul 5 gegen das Zusatzmodul 11 getauscht wird. Ganz wesentlich ist dabei, daß das damit erzielte "neue" Meßgerät mit dem geänderten Meßwertumformer keine Neukalibrierung des Meßgeräts erfordert. Schließlich erhält das jeweilige Zusatzmodul 5, 11 bereits linearisierte Meßdaten, so daß die komplette "Intelligenz" des Meßgeräts im Grundmodul 1 verwirklicht ist, während das jeweilige Zusatzmodul 5, 11 lediglich eine entsprechende Weiterverarbeitung oder/und Weitergabe der Daten in entsprechend unterschiedlichen Protokoll- und/oder Bussysteme ermöglicht.

Schließlich sei auch noch darauf hingewiesen, daß das Gründmodul 1, das jeweilige Zusatzmodul 5, 11 und die Skalenscheibe 3 immer in ein einheitliches Gehäuse 17 eingebaut werden, in dem das Grundmodul 1 und das jeweilige Zusatzmodul 5, 11 derart parallel und im Abstand voneinander angeordnet sind, daß über die optischen Schnittstellen 4, 6 Daten ausgetauscht werden können und gleichzeitig eine sichere galvanische Trennung gewährleistet ist. Im Ergebnis erhält man nach außen hin also immer ein im wesentlichen gleich anmutendes Meßgerät, das allerdings - abhängig von dem jeweils verwendeten Zusatzmodul 5, 11 - unterschiedliche Funktionalitäten, insbesondere im Hinblick auf die weitere Datenübertragung über eine externe Schnittstelle und gewisse Zusatzfunktionalitäten aufweist.

## Patentansprüche

1. Meßgerät, insbesondere Durchfluß- oder Füllstandsmeßgerät, mit einem Grundmodul (1) zur Erfassung und Bearbeitung von Meßdaten, **dadurch gekennzeichnet, daß** ein Zusatzmodul (5, 11) vorgesehen ist und das Grundmodul und das Zusatzmodul (5, 11) jeweils eine optische Schnittstelle (4, 6) aufweisen, über die das Grundmodul (1) und das Zusatzmodul (5, 6) miteinander gekoppelt sind.

2. Meßgerät nach Anspruch 1, **dadurch gekennzeichnet, daß** über die optischen Schnittstellen (4, 6) die Meßdaten von dem Grundmodul (1) an das Zusatzmodul (5, 11) übertragbar sind.

3. Meßgerät nach Anspruch 1 oder 2, **dadurch gekennzeichnet, daß** das Grundmodul (1) eine Linearisierungseinheit aufweist, in der die erfaßten Meßdaten in Abhängigkeit von vorbestimmten Kalibrierparametern linearisiert werden.

4. Meßgerät nach einem der Ansprüche 1 bis 3, **dadurch gekennzeichnet, daß** das Zusatzmodul (5, 11) eine externe Schnittstelle (7) aufweist, über die die Meßdaten ausgegeben werden können.

5. Meßgerät nach einem der Ansprüche 1 bis 4, **dadurch gekennzeichnet, daß** das Zusatzmodul (11) eine Anzeige (12) aufweist, über die die Meßdaten angezeigt werden können.

6. Meßgerät nach einem der Ansprüche 1 bis 5, **dadurch gekennzeichnet, daß** das Grundmodul (1) eine zusätzliche Schnittstelle zur Ausgabe der Meßdaten oder/und zur Einstellung von Parametern des Grundmoduls (1) aufweist.

7. Meßgerät nach Anspruch 6, **dadurch gekennzeichnet, daß** das Grundmodul (1) einen Zweidrahtsignalausgang aufweist.

8. Meßgerät nach Anspruch 6 oder 7, **dadurch gekennzeichnet, daß** das Grundmodul eine Busschnittstelle aufweist

9. Meßgerät nach einem der Ansprüche 1 bis 8, **dadurch gekennzeichnet, daß** das Grundmodul (1) und das Zusatzmodul (5, 11) derart einander benachbart und im Abstand voneinander angeordnet sind, daß eine sichere galvanische Trennung zwischen dem Grundmodul (1) und dem Zusatzmodul (5, 11) erzielt wird.

10. Meßgerät nach einem der Ansprüche 1 bis 9, **dadurch gekennzeichnet, daß** das Grundmodul (1) über die externe Schnittstelle (7) des Zusatzmoduls (5, 11) elektrisch gespeist wird.

11. Meßgerät nach einem der Ansprüche 1 bis 10, **dadurch gekennzeichnet, daß** das Zusatzmodul (5,11) austauschbar ist.
